# EUROPEAN PATENT APPLICATION

(11) **EP 3 156 738 A1**
(43) Date of publication of application: **19.04.2017**
(21) Application number: 14894628.8
(22) Date of filing: 13.06.2014
(51) Int. Cl.: F24F 13/20, B60H 1/34, F24F 13/15, F24F 13/32

(54) **CEILING-EMBEDDED AIR CONDITIONER**

(71) Applicant: Mitsubishi Electric Corporation, Chiyoda-ku Tokyo 100-8310 (JP)
(72) Inventor: YAMAGUCHI, Takahiro, Tokyo 100-8310 (JP)
(74) Representative: Pfenning, Meinig & Partner mbB
(86) International application number: PCT/JP2014/065773
(87) International publication number: WO 2015/189992

(57) **Abstract**

A ceiling cassette air conditioner includes: an external case 3 attached to a lower side of a ceiling-embedded casing 2, and forming an air inlet 9 with the ceiling U; an external panel 4 attached to a lower side of the external case 3, having an air blower 7 and a heat exchanger 8 inside, and forming an air outlet 10 with the external case 3 to discharge conditioned air passing the heat exchanger 8 in a ceiling-parallel direction; and wind direction adjusting vanes 5 provided on an outer periphery of the external panel 4 to adjust a discharge direction of the conditioned air discharged from the air outlet 10. During operation, the wind direction adjusting vanes 5 are turned in a clockwise and counterclockwise direction from a reference position M, which is defined such that the wind direction adjusting vanes flushes with the external panel 4 during operation stop.

## Description

### TECHNICAL FIELD

The present invention relates to a ceiling cassette air conditioner, and relates particularly to a configuration regarding a turning operation of a wind direction adjusting vane for adjusting a discharge direction of conditioned air.

### BACKGROUND ART

An air conditioner controls an air conditioning operation so that the temperature in a room becomes closer to a set indoor temperature. In addition, there are many kinds of air conditioners having a wind direction adjusting vane for changing the discharge direction of conditioned air at an air outlet of the conditioned air, and the discharge direction of the conditioned air is adjusted by changing the direction of the wind direction adjusting vane.

For example, in a ceiling cassette air conditioner disclosed in Patent Literature 1, by turning a wind direction changing plate in an inward direction (the direction toward an air inlet at the bottom face of the air conditioner body), a short circuit is generated through which a part of conditioned air is sucked from the air inlet. Thus, the temperature of the air supplied to the heat exchanger is made to be lower in cooling and higher in heating, so that the time to reach a set temperature is shortened.

In addition, Patent Literature 2 discloses an air conditioning apparatus in which when a wind direction adjusting blade is set to be oriented such that conditioned air is discharged toward a room air suction port side, a correction is performed on the detected suction temperature to cancel the influence of the temperature of the conditioned air taken in from the suction port, and an air conditioning operation is controlled by using the corrected temperature.

In addition, Patent Literature 3 discloses an air conditioner in which an air inlet is provided at the peripheral part of the lower end face of the casing, an air outlet is provided closer to the central part than the air inlet, and a movable flap is provided at the air outlet. This air conditioner supplies cooling or heating wind with a uniform temperature distribution in the whole area of a living space, or to a given place as required.

### CITATION LIST

### PATENT LITERATURE

Patent Literature 1: Japanese Patent Application Laid-Open No. 2001-147041
Patent Literature 2: Japanese Patent Application Laid-Open No. 2011-231975
Patent Literature 3: Japanese Patent Application Laid-Open No. 2001-272053

### SUMMARY OF INVENTION

### TECHNICAL PROBLEM

However, in the above Patent Literature 1 and Patent Literature 2, there is a following problem: since an air inlet is arranged at the bottom center of the air conditioner or air conditioning apparatus, when four wind direction changing plates or four wind direction adjusting vanes arranged around the air inlet are turned in the inward direction, the air flows into the air inlet so that it is impossible to supply an airflow in the inward direction to the indoor space. In addition, in the above Patent Literature 3, the moving flap does not turn inwardly, and thus there is a problem that the air flow in the inward direction cannot be supplied to the indoor space.

The present invention is implemented to solve the above problems, and it is an object of the invention to perform air flow control in a downward direction and an inward direction of a ceiling cassette air conditioner, in addition to air flow control in an outer peripheral direction of the ceiling cassette air conditioner.

### SOLUTION TO PROBLEM

A ceiling cassette air conditioner according to the present invention includes: an external case attached to a lower side of a casing embedded in a ceiling, and having an air inlet between the external case and the ceiling; an external panel attached to a lower side of the external case, having an air blower and a heat exchanger inside, and having an air outlet between the external panel and the external case to discharge conditioned air passed through the heat exchanger in a direction parallel to the ceiling; and a plurality of wind direction adjusting vanes provided on an outer periphery of the external panel to adjust a discharge direction of the conditioned air to be discharged from the air outlet. During operation, the plurality of wind direction adjusting vanes are turned in a clockwise direction and in a counterclockwise direction from a reference position, wherein the reference position is defined to be a position during operation stop in which the plurality of wind direction adjusting vanes flushes with the external panel.

### ADVANTAGEOUS EFFECTS OF INVENTION

According to the present invention, it is possible to supply an air flow in a downward direction and in an inward direction of the ceiling cassette air conditioner, so that the directivity of the supplying air flow can be enhanced, and that a supplying range of the air flow in a living space can be widened.

### BRIEF DESCRIPTION OF DRAWINGS

Fig. 1 is a perspective view of a ceiling cassette air conditioner viewed from below during operation according to Embodiment 1;
Fig. 2 is a vertical sectional view of the ceiling cassette air conditioner during operation stop according to Embodiment 1;
Fig. 3 is a front view of the ceiling cassette air conditioner during operation stop according to Embodiment 1;
Fig. 4 is a vertical sectional view taken along the line A-A in Fig. 3 viewed from the direction represented by the arrow;
Fig. 5 shows explanatory drawings showing a turning of a wind direction adjusting vane of the ceiling cassette air conditioner according to Embodiment 1;
Fig. 6 shows explanatory drawings, each of which shows an example of a turning pattern of wind direction adjusting vanes of the ceiling cassette air conditioner according to Embodiment 1;
Fig. 7 is an explanatory drawing showing an example of a turning pattern of wind direction adjusting vanes of a ceiling cassette air conditioner according to Embodiment 2;
Fig. 8 is a vertical sectional view showing a ceiling cassette air conditioner during operation stop according to Embodiment 3; and
Fig. 9 is an explanatory drawing showing discharge of conditioned air of the ceiling cassette air conditioner during operation according to Embodiment 3.

### DESCRIPTION OF EMBODIMENTS

Hereinafter, some embodiments for carrying out the present invention will be described for explaining the present invention in more detail in accordance with the accompanying drawings.

### Embodiment 1

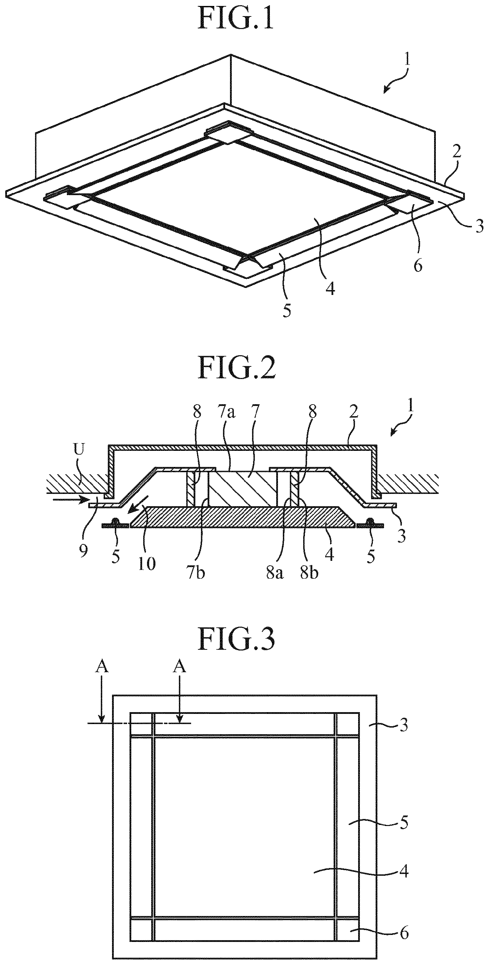

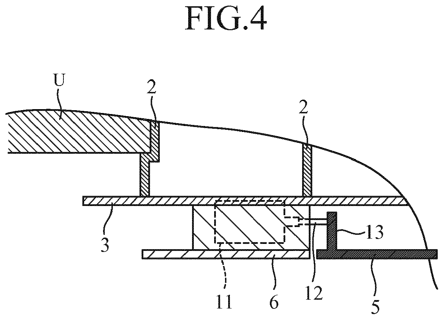

Fig. 1 is a perspective view of a ceiling cassette air conditioner (state of an outward air blow) during operation viewed from below according to Embodiment 1, Fig. 2 is a vertical sectional view showing a state during operation stop thereof, Fig. 3 is a front view showing a state during operation stop, and Fig. 4 is a vertical sectional view taken along the line A-A in Fig. 3 viewed from the direction represented by the arrow. Here, the outward air blow refers to the state in which the lower end portion of the wind direction adjusting vane 5 described later is positioned toward an outward direction of the ceiling cassette air conditioner 1 (see Fig. 1). In addition, in the vertical sectional view of Fig. 2, an illustration of a turning mechanism of the wind direction adjusting vane 5 or the like is omitted (the same applies to other figures).

In the ceiling cassette air conditioner 1 according to Embodiment 1, an external case 3 is arranged to be fittable to the casing 2, in which the bottom part of the casing 2 is opened such that an air passage is formed at the inner center of the casing 2. An external panel 4 is arranged to be fittable to the lower center of the external case 3, and four wind adjusting vanes 5 are attached to the outer areas along respective sides of the rectangular external panel 4. Further, four connection panels 6 are provided in respective areas being four corners of the external panel 4 and formed by wind adjusting vanes 5 adjacent to each other. On each of the connection panels 6, a drive source such as a motor for driving each wind direction adjusting vane, a power transmission mechanism, and so on are mounted. When the operation of the ceiling cassette air conditioner 1 is stopped, the external panel 4, four wind adjusting vanes 5, and four connection panels 6 are arranged so as to be flush with one another.

As shown in Fig. 2, the central part of the external case 3 is opened, and an air blow fan (air blower) 7 having a suction port 7a formed on the upper side and a discharge port 7b formed on the side surface side, and a motor (not shown) for driving the air blow fan 7, and so on are disposed in a place below the opened part. In addition, a heat exchanger 8 is disposed so as to surround the circumference of the air blow fan 7, an inner surface 8a and an outer surface 8b of the heat exchanger 8 are opened to the air passage, and the inner surface 8a is opposing to the discharge port 7b of the air blow fan 7. The aforementioned external panel 4 is fit in a place below the air blow fan 7 and heat exchanger 8.

At the outer area along each side of the external case 3, an opening part through which the suction port 7a of the air blow fan 7 communicates with a room is formed between the external case 3 and the wall surface of a ceiling U, to thereby constitute an air inlet 9. In addition, at the outer area along each side of the rectangular external panel 4, an opening through which the outer surface 8b of the heat exchanger 8 communicates with a room is formed between the external panel 4 and the lower surface of the external case 3, to thereby constitute an air outlet 10. As shown in Fig. 2, conditioned air is discharged from the air outlet 10 in a direction parallel to the ceiling U. By arranging the aforementioned wind direction adjusting vane 5 at the air outlet 10, wind direction control is performed to the conditioned air to be discharged from the air outlet 10.

Next, the turning mechanism of the wind adjusting vane 5 will be described.

As shown in Fig. 4, a motor 11 is mounted on the connection panel 6, and one end of a turning shaft 12 is connected to the motor 11, while the other end thereof is engaged with a shaft support member 13 formed to stand on the wind direction adjusting vane 5. The turning shaft 12 is turned by the rotation of the motor 11, and the turning is transmitted to the wind direction adjusting vane 5 through the shaft support member 13, so that the wind direction adjusting vane 5 swings in a predetermined direction. Although not shown in the figure, a bearing is formed for supporting an axis at an opposite end portion thereof where the shaft support member 13 of the wind direction adjusting vane 5 is not provided. The motor 11 is provided for each of the four wind direction adjusting vanes 5 separately. By controlling the drive of these separate motors 11 individually, each of the wind direction adjusting vanes 5 is made to be operated independently.

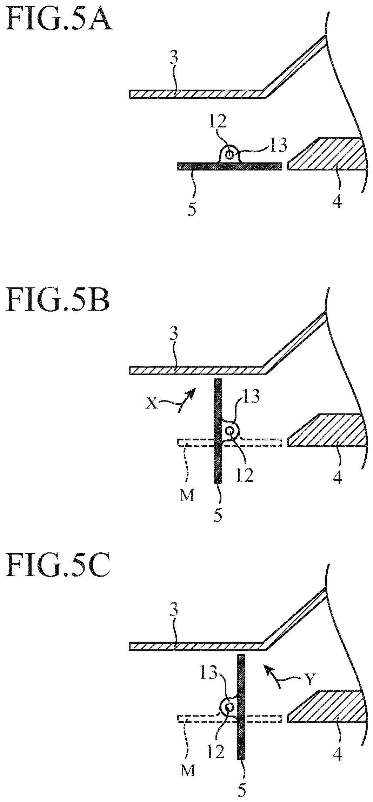

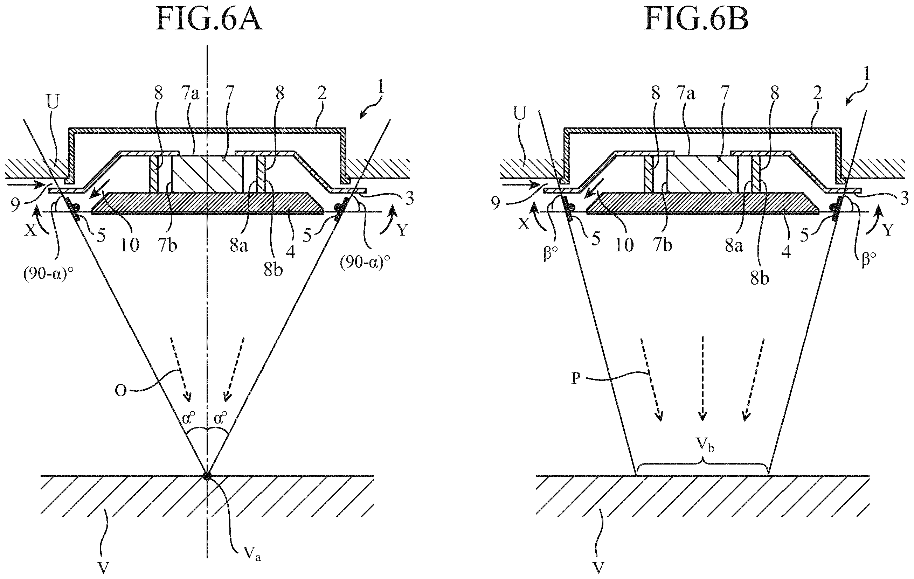

Next, an operation of the ceiling cassette air conditioner 1 will be described based on Figs. 3, 5 and 6. Fig. 5 shows explanatory drawings representing turning of the wind direction adjusting vane of the ceiling cassette air conditioner according to Embodiment 1, and Fig. 6 shows explanatory drawings representing examples of the turning pattern of the wind direction adjusting vanes of the ceiling cassette air conditioner according to Embodiment 1. The ceiling cassette air conditioner 1 configured as mentioned above is generally called the 4-way cassette type, and sucks indoor air from the air inlet 9 by rotation of the air blow fan 7. The sucked air is discharged to blow the heat exchanger 8. Heat exchange between air and refrigerant is performed on the heat exchanger 8. The air which receives or is deprived of heat through passing of the heat exchanger 8 is discharged from the air outlet 10 to the room.

During operation stop of the ceiling cassette air conditioner 1, the wind direction adjusting vane 5 is stopped in a state parallel to the wall surface of the ceiling U to thereby form a surface flush with the external panel 4 (see Fig. 5(a); such a stopped position is hereinafter referred to as the reference position M). On the other hand, during operation of the ceiling cassette air conditioner 1, each wind direction adjusting vane 5 swings in a range of 90° (see Fig. 5(b)) in the clockwise direction (the arrow X direction) from the reference position M, and swings in a range of 90° (see Fig. 5(c)) in the counterclockwise direction (the arrow Y direction) from the reference position M. Though only one wind direction adjusting vanes 5 is shown in Fig. 5, also for the opposing wind direction adjusting vane 5, when being viewed from the same direction in the vertical sectional view, it is defined that the clockwise direction is the arrow X direction, and the counterclockwise direction is the arrow Y direction.

Fig. 6 shows turning of the wind direction adjusting vanes 5 in the inward direction, and further shows the air flow formed in a case of such a turning in the inward direction. Here, the inward direction refers to a state where the lower end portion of the turned wind direction adjusting vane 5 is positioned toward the center direction of the ceiling cassette air conditioner 1.

In the turning pattern of Fig. 6(a), one of the opposing wind direction adjusting vanes 5 is turned in the arrow X direction by (90 - α)° from the reference position M, and the other of the opposing wind direction adjusting vanes 5 is turned in the arrow Y direction by (90 - α)° from the reference position M. As a result, the air flow O at the angle 2α° that flows toward the position Va on the floor V is formed.

In the turning pattern of Fig. 6(b), one of the opposing wind direction adjusting vanes 5 is turned in the arrow X direction by *β*° from the reference position M, and the other of the opposing wind direction adjusting vanes 5 is turned in the arrow Y direction by *β*° from the reference position M. As a result, the air flow P that flows toward the area Vb on the floor V is formed.

As shown in Fig. 6(a) and Fig. 6(b), by turning the wind direction adjusting vanes 5 separately in the inward direction, an air flow toward the downward direction and inward direction of the ceiling cassette air conditioner 1 can be formed.

Note that, the turning of the pair of wind direction adjusting vanes 5 (not shown) adjacent to the wind direction adjusting vanes 5 shown in Fig. 6(a) and Fig. 6(b) are appropriately adjusted in accordance with a supply area of the air flow. This is the same in the case of Embodiment 2 and Embodiment 3 described below.

Next, a control system of the ceiling cassette air conditioner 1 will be described. The ceiling cassette air conditioner 1 includes a control unit (not shown), and controls various constituent devices. Here, in particular, a description will be given focusing on turning control of the wind direction adjusting vane 5. The control unit is connected to a variety of sensors (not shown) such as a discharge air temperature sensor, a room temperature sensor, a floor temperature sensor, an air volume sensor, and an indoor heat exchanger temperature sensor, and receives a temperature detection signal or an air volume detection signal output from each of these sensors. In addition, the control unit is connected to an operation unit that accepts an operation instruction from a user (for example, a remote controller) to receive an operation signal from the user. Based on various detection signals and operation signals, the control unit controls driving of the motor for the air blow fan 7 and the motor 11 of the wind direction adjusting vane 5. By controlling driving of the motor 11 provided separately for each of the wind direction adjusting vanes 5 individually, an independent operation is performed for each of the wind direction adjusting vanes 5.

As described above, according to this Embodiment 1, since it is configured that the turning range of the wind direction adjusting vane 5 is set in the range of 90° in the clockwise direction and in the range of 90° in the counterclockwise direction from the reference position M of the wind direction adjusting vane 5 during operation stop of the ceiling cassette air conditioner 1, air can be blown in the downward direction and in the inward direction of the ceiling cassette air conditioner, so that directivity of the air blow can be enhanced. In addition, the volume of the air blow to be supplied can be increased. In this manner, the range of the air flow to be supplied to a living space can be made wider.

In addition, according to this Embodiment 1, since it is configured that the air inlet 9 is formed between the external case 3 and the wall surface of the ceiling U, and that the air outlet 10 is formed between the external panel 4 and the lower surface of the external case 3, air can be blown in the downward direction and in the inward direction of the ceiling cassette air conditioner without generating short circuit.

Additionally, though the aforementioned Embodiment 1 shows the case where each wind direction adjusting vane 5 is turned in the range of 90° in the clockwise direction (the arrow X direction) from the reference position M, and turned in the range of 90° in the counterclockwise direction (the arrow Y direction) from the reference position M, needless to say, it may be a case where the wind direction adjusting vane 5 is turned to a position less than 90° in the clockwise direction from the reference position M, and turned to a position less than 90° in the counterclockwise direction from the reference position M. Reversely, it may be a case where the wind direction adjusting vane 5 is turned to a position at 90° or more in the clockwise direction from the reference position M, and turned to a position at 90° or more in the counterclockwise direction from the reference position M.

### Embodiment 2

In Embodiment 2, another turning pattern of the wind direction adjusting vanes 5 will be described.

Here, since the components of a ceiling cassette air conditioner of Embodiment 2 are the same as those shown in Figs. 1 to 5 of Embodiment 1, they are denoted by the same reference numerals as those of Figs. 1 to 5, and descriptions thereof will be omitted.

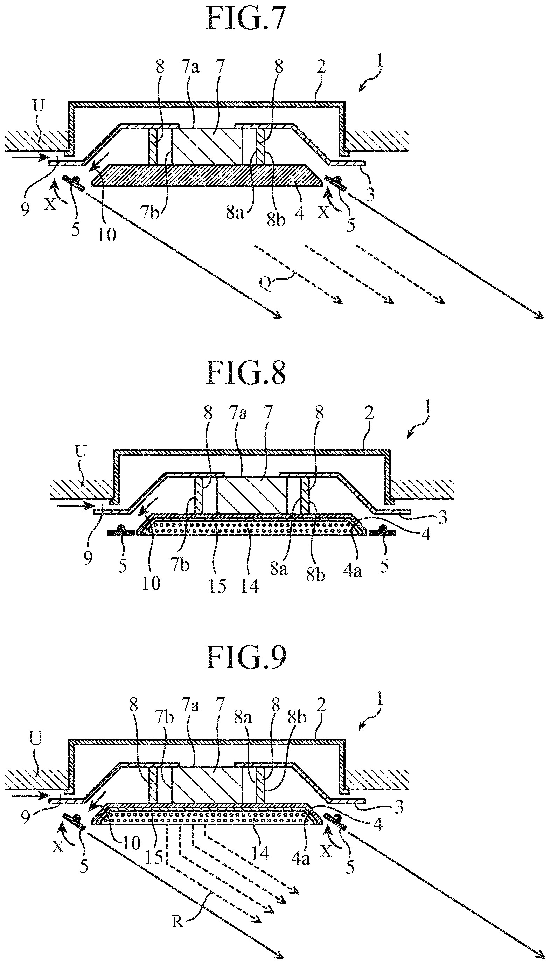

Fig. 7 is an explanatory drawing showing an example of a turning pattern of the wind direction adjusting vanes of the ceiling cassette air conditioner according to Embodiment 2.

In the ceiling cassette air conditioner 1 of Embodiment 2, a control is performed to turn interlockingly two wind direction adjusting vanes 5 opposing to each other across the external panel 4. The two wind direction adjusting vanes 5 opposing to each other are turned in a same direction by a same angle as shown in Fig. 7. Specifically, the control unit controls to drive interlockingly the motor 11 that turns one of the opposing wind direction adjusting vanes 5, and the motor 11 that turns the other of the opposing wind direction adjusting vanes 5, to thereby turn the two wind direction adjusting vanes 5 opposing to each other in a same direction by a same angle. The interlocking drive control is achieved by a method of electrically controlling each motor 11, for example.

By turning the two wind direction adjusting vanes 5 opposing to each other across the external panel 4 in a same direction by a same angle, the air flow Q in one direction is formed as shown in Fig. 7, and thus larger volume of air blow is supplied in a desired direction.

Here, though in the example shown in Fig. 7, the air flow Q toward the right direction with respect to the ceiling cassette air conditioner 1 is formed by turning the two wind direction adjusting vanes 5 opposing to each other across the external panel 4 in the arrow X direction by a same angle, it is possible to form an air flow toward various directions by changing the turning directions of the wind direction adjusting vanes 5.

As described above, according to this Embodiment 2, since it is configured that the control is performed to turn two wind direction adjusting vanes 5 opposing to each other across the external panel 4 interlockingly to thereby turn the vanes in a same direction by a same angle, the air flow that increases the volume of air blow in a desired direction can be supplied.

### Embodiment 3

The this Embodiment 3 shows a configuration in which a radiation panel is fit in the external panel shown in Embodiment 1 and Embodiment 2 to thereby supply cold or warm heat from the radiation panel in a wide range.

Fig. 8 is a vertical sectional view of a ceiling cassette air conditioner showing a state during operation stop according to Embodiment 3. Here, parts that are the same as or correspond to the components of the ceiling cassette air conditioner 1 according to Embodiment 1 are denoted by signs that are the same as those used in Embodiment 1, and descriptions thereof will be omitted or simplified.

In the ceiling cassette air conditioner 1a of Embodiment 3, a radiation panel 14 is fit in a recessed part 4a formed below the external panel 4 as shown in Fig. 8. The radiation panel 14 includes piping 15 inside, a refrigerant that is adjusted at a set temperature by a temperature control device (not shown) or the like is circulated inside the piping 15, so that air conditioning by radiation that uses the heat of the refrigerant is performed to the room. In the air conditioning based on the radiation from the radiation panel 14, for example, during cooling operation, by the circulation through the piping 15 of the refrigerant whose temperature is adjusted in the temperature control device, air conditioning by cold radiation from the lower surface of the radiation panel 14 is performed to the space below the radiation panel 14. On the other hand, during heating operation, air conditioning by heat radiation is performed from the lower surface of the radiation panel 14 to the space below the radiation panel 14.

Fig. 9 is an explanatory drawing showing discharge of conditioned air of the ceiling cassette air conditioner during operation according to Embodiment 3.

In this Embodiment 3, in addition to the air conditioning by cold radiation and the air conditioning by heat radiation from the radiation panel 14 mentioned above, indoor air conditioning is performed by air conditioning based on the discharge of the conditioned air from the wind direction adjusting vanes 5. As a result, by adjusting the turning direction and turning angle of the wind direction adjusting vanes 5 to direct the discharge direction to the side of the radiation panel 14 as shown in Fig. 9, cold or warm heat caused by cold radiation or heat radiation from the radiation panel 14 is pushed and spread strongly in a uniform direction by the air flow R. Thus, the cold or warm heat is supplied to wider range as compared to the cold or warm range that is supplied with only the cold or warm heat by cold radiation or heat radiation from the radiation panel 14.

Note that, though Fig. 9 shows an example in which the two wind direction adjusting vanes 5 opposing to each other across the external panel 4 are turned in the arrow X direction by a same angle, to thereby form the air flow R that flows in the right direction with respect to the ceiling cassette air conditioner 1, air flow of various directions can be formed by varying the turning direction of the wind direction adjusting vanes 5.

As described above, according to this Embodiment 3, it is configured that the radiation panel 14 that performs the air conditioning by cold radiation or the air conditioning by heat radiation is provided on the lower surface of the external panel 4 is combined with the air conditioning by the discharge from the wind direction adjusting vanes 5. As a result, the air conditioning by cold radiation or heat radiation from the radiation panel can be pushed and spread strongly in a uniform direction by the air flow discharged from the wind direction adjusting vanes, so that the cold or warm heat by the cold radiation or heat radiation can be supplied in a wider range.

Further, though in the configurations according to the above Embodiment 1 to Embodiment 3, four wind direction adjusting vanes 5 are arranged on the outer periphery of the rectangular external panel 4, the shape of the external panel 4, and the shape, arrangement, and the arrangement number of wind direction adjusting vanes are appropriately changeable.

Note that, it is to be understood that a free combination of embodiments, variations of any components of embodiments or removal of any components of embodiments are possible within the scope of the present invention.

### INDUSTRIAL APPLICABILITY

Since a ceiling cassette air conditioner according to the present invention enables an air blow in the downward direction and in the inward direction of the ceiling cassette air conditioner, it is suitable for an air conditioner that supplies an air flow over a wider range in a living space.

### REFERENCE SIGNS LIST

- 1, 1a:: ceiling cassette air conditioner
- 2:: casing
- 3:: external case
- 4:: external panel
- 4a:: recessed part
- 5:: wind direction adjusting vane
- 6:: connection panel
- 7:: air blow fan
- 7a:: suction port
- 7b:: discharge port
- 8:: heat exchanger
- 8a:: inner surface
- 8b:: outer surface
- 9:: air inlet
- 10:: air outlet
- 11:: motor
- 12:: turning shaft
- 13:: shaft support member
- 14:: radiation panel
- 15:: piping

## Claims

1. A ceiling cassette air conditioner comprising:
an external case attached to a lower side of a casing embedded in a ceiling, and having an air inlet between the external case and the ceiling;
an external panel attached to a lower side of the external case, having an air blower and a heat exchanger inside, and having an air outlet between the external panel and the external case to discharge conditioned air passed through the heat exchanger in a direction parallel to the ceiling; and
a plurality of wind direction adjusting vanes provided on an outer periphery of the external panel to adjust a discharge direction of the conditioned air to be discharged from the air outlet,
wherein during operation, the plurality of wind direction adjusting vanes are turned in a clockwise direction and in a counterclockwise direction from a reference position, wherein the reference position is defined to be a position during operation stop in which the plurality of wind direction adjusting vanes flushes with the external panel.

2. The ceiling cassette air conditioner according to claim 1, wherein
the plurality of wind direction adjusting vanes are individually turned in a range of 90° in the clockwise direction from the reference position and in a range of 90° in the counterclockwise direction from the reference position.

3. The ceiling cassette air conditioner according to claim 1, wherein
two wind direction adjusting vanes opposing to each other across the external panel, from among the plurality of wind direction adjusting vanes, are turned in a same direction by a same angle.

4. The ceiling cassette air conditioner according to claim 1, further comprising a radiation panel that performs heat exchange by radiation at the center of a lower surface of the external panel.
